Europäisches Patentamt

European Patent Office

Office européen des brevets

(19)

(11) Veröffentlichungsnummer: **0 269 952**
**A2**

(12) **EUROPÄISCHE PATENTANMELDUNG**

(21) Anmeldenummer: 87117072.6

(22) Anmeldetag: 19.11.87

(51) Int. Cl.⁴ **H02H 7/26 , H02H 7/28**

(30) Priorität: 25.11.86 DD 296613

(43) Veröffentlichungstag der Anmeldung:
**08.06.88 Patentblatt 88/23**

(84) Benannte Vertragsstaaten:
**AT BE CH DE FR GB IT LI NL**

(71) Anmelder: **VEB Geräte- und Regler-Werk Leipzig**
**Baalsdorfer Strasse 55**
**DDR-7027 Leipzig(DD)**

(72) Erfinder: **Rohbeck, Volker**
**Sachsenstrasse 9**
**DD-7050 Leipzig(DD)**
Erfinder: **Burkhardt, Ralf**
**Manetstrasse 2**
**DD-7010 Leipzig(DD)**
Erfinder: **Gibas, Peter, Dr.**
**Schirmerstrasse 1**
**DD-7050 Leipzig(DD)**
Erfinder: **Kriesel, Werner, Prof. Dr. sc. phil.**
**Rödelstrasse 5**
**DD-7031 Leipzig(DD)**
Erfinder: **Jeckel, Uwe**
**Hoferstrasse 5**
**DD-7050 Leipzig(DD)**
Erfinder: **Steinbock, Klaus, Dr.-Ing.**
**Arthur-Hoffmann-Strasse 4**
**DD-7010 Leipzig(DD)**

(74) Vertreter: **Patentanwälte Beetz sen. - Beetz jun. Timpe - Siegfried - Schmitt-Fumian**
**Steinsdorfstrasse 10**
**D-8000 München 22(DE)**

(54) **Fehlertolerantes ringförmiges Stromversorgungssystem.**

(57) Die Erfindung betrifft ein fehlertolerantes ringförmiges Stromversorgungssystem, das der Stromversorgung von räumlich verteilten Verbrauchern dient, die über miteinander kommunikationsfähige Informationsverarbeitungseinheiten verfügen, wie dies z. B. bei Automatisierungsanlagen der Fall ist.

Es weist in den Verbindungsleitungen (L) nahe den Netzanschlußstellen (K) Strommeßeinrichtungen (ME) für die Messung des Betrages des Stroms und die Bestimmung seiner Richtung auf. Außerdem sind steuerbare Schalter (TE) vorgesehen, die von einer Auswertelogik (A) angesteuert werden, welche ihrerseits mit Sendeeinrichtungen und Empfangseinrichtungen (E) verbunden ist.

## Fehlertolerantes ringförmiges Stromversorgungssystem

Die Erfindung betrifft ein fehlertolerantes ringförmiges Stromversorgungssystem, welches für miteinander kommunikationsfähige Informationsverarbeitungseinheiten geeignet ist. Das Stromversorgungssystem weist einen einzigen Einspeisepunkt auf. Der Ring besteht aus Punkt-zu-Punkt-Verbindungsleitungen, wobei die Verbindungspunkte der Verbindungsleitungen auch die fehlertoleranten Netzanschlußstellen der Verbraucher bilden.

Das fehlertolerante Stromversorgungssystem ist insbesondere für solche Anwendungsfälle bestimmt, wo ein hohes Zuverlässigkeitsniveau der Versorgung mit elektrischer Energie unabdingbar ist und wo die zu versorgenden Verbraucher über miteinander kommunikationsfähige Informationsverarbeitungseinheiten verfügen. Solche Anwendungsfälle liegen beispielsweise in Automatisierungsanlagen mit verteilten Funktionseinheiten vor.

Es ist bekannt, Stromversorgungsnetze mit einer ringförmigen Struktur aufzubauen. Diese Ringstruktur ist die einfachste redundante Struktur, da sie es ermöglicht, eine Leitungsunterbrechung an einer beliebigen Stelle im Ringsystem zu tolerieren, ohne daß zusätzlicher Aufwand in Form von Schaltern oder Meßeinrichtungen entsteht. Allerdings sind solche Stromversorgungsnetze mit dem Nachteil verbunden, daß im Falle eines Kurzschlusses die Versorgung für das gesamte System ausfällt. Aus diesem Grunde sind solche Systeme vor allem bei den Anwendungsgebieten ungeeignet, wo eine große Versorgungssicherheit gefordert wird. Zur Behebung dieses Nachteils ist es bekannt, in Netzen mit zwei Netzeinspeisungen die kurzschlußbehafteten Teile des Stromversorgungssystems abzutrennen (DE-A1 25 31 707). Hier wird der kurzschlußbehaftete Teil des Stromversorgungsnetzes mittels einer in jeder Netzanschlußstelle vorgenommenen Messung der Zeit vom Auftreten des Kurzschlusses bis zum Abschalten durch zusätzliche nahe der Netzeinspeisung angeordnete Distanzrelais ermittelt und abgeschaltet. Erst danach schließen die Distanzrelais wieder den Stromkreis. Diese Lösung hat aber vor allem den Nachteil, daß im Kurzschlußfall stets eine durch die Zeitmessung bedingte größere stromlose Pause auftritt, die beispielsweise in zu versorgenden Informationsverarbeitungseinheiten zu Datenverlusten bzw. in anderen Stromversorgungssystemen mit hohen Zuverlässigkeitsforderungen zu unerwünschten Störungen führen kann. Des weiteren gehört es bei Anordnungen mit verteilten Funktionseinheiten, die untereinander in Kommunikationsbeziehungen stehen, zum Stand der Technik, das dort notwendige Stromversorgungssystem in einer Ringstruktur auszuführen (DE-A1 29 05 757). Diese Anordnung weist zwar Mittel gegen Fehler im Informationsübertragungssystem auf; im Falle eines Kurzschlusses im Stromversorgungssystem fällt aber das gesamte System aus.

Der Erfindung liegt die Aufgabe zugrunde, ein fehlertolerantes ringförmiges Stromversorgungssystem für miteinander kommunikationsfähige Informationsverarbeitungseinheiten gemäß dem Oberbegriff des Patentanspruches 1 so weiterzubilden, daß Kurzschlußfortschaltungen ohne systembedingte stromlose Pausen ermöglicht werden.

Diese Aufgabe wird durch die kennzeichnenden Merkmale des Anspruchs 1 gelöst; zweckmäßige Ausgestaltungen des Erfindungskonzeptes sind in den abhängigen Ansprüchen definiert.

Im folgenden wird die Wirkungsweise des fehlertoleranten Stromversorgungssystems gemäß der Erfindung näher erläutert.

Im fehlerfreien Fall, wo alle Verbindungsleitungen zwischen den Netzanschlußstellen intakt sind, sind auch alle Schalter geschlossen. Die der Fehlerinformation zu bzw. von den benachbarten Netzanschlußstellen dienenden Sende-und Empfangseinrichtungen sind nicht aktiviert. Die in den Netzanschlußstellen angeordneten Informationsverarbeitungseinheiten werden über das ringförmige Stromversorgungssystem mit Energie versorgt und führen über das hier nicht näher dargestellte Informationsübertragungssystem, welches z. B. linienförmig, sternförmig oder ringförmig strukturiert sein kann, ihre bestimmungsgemäße Kommunikation durch.

Ein Kurz-oder Erdschluß einer Verbindungsleitung zwischen zwei Netzanschlußstellen hat zur Folge, daß in Abhängigkeit vom Innenwiderstand der speisenden Quelle, von den Widerständen der Verbindungsleitungen, der Belastung durch die angeschlossenen Verbraucher, der Topologie des Systems, des Ortes des Kurz-bzw. Erdschlusses und der Einstellung des oberen Stromgrenzwertes der obere Stromgrenzwert entweder in allen oder aber zumindest in den Netzanschlußstellen einer Seite des Ringnetzes zwischen Kurzschlußstelle und Einspeisepunkt überschritten wird.

Daraufhin tauschen die jeweils benachbarten kommunikationsfähigen Informationsverarbeitungseinheiten quasi gleichzeitig eine Information über die aktuelle Stromflußrichtung aus. Dazu werden jeweils über die Auswertelogik von den die Überschreitung der oberen Stromgrenze registrierenden Meßeinrichtungen die jeweils zugeordneten Sendeeinrichtungen aktiviert, die Signale SSl und SSr entsprechend den angegebenen Gleichungen aussenden. In den Auswertelogiken erfolgt der Vergleich der empfangenen Signale (ESl, ESr) mit den durch die Meßeinrichtungen erzeugten Stromrichtungssignalen, woraus die Ansteuersignale für die Schalter gebildet werden. Da nur von den beiden durch die kurzschlußbehaftete Verbindungsleitung miteinander verbundenen Netzanschlußstellen und von den dieser Leitung zugeordneten Meßeinrichtungen gleiche Stromflußrichtungen gemessen werden, erfolgt somit das Abschalten der kurzschlußbehafteten Verbindungsleitung durch die zugeordneten Schalter der beiden durch diese Verbindungsleitung miteinander verbundenen Netzanschlußstellen.

Darüber hinaus gestattet die Erfindung auch, einen internen Kurz-oder Erdschluß in einer Netzanschlußstelle festzustellen und die defekte Netzanschlußstelle abzutrennen. Ein interner Kurz-oder Erdschluß in einer Netzanschlußstelle hat die Wirkung, daß die Stromflußrichtung in allen intakten Verbindungsleitungen aus der Sicht der Netzanschlußstelle gleich ist und in mindestens einer Verbindungsleitung das Überschreiten der oberen Stromgrenze registriert wird. Zur Feststellung eines internen Kurz-oder Erdschlusses in einer Netzanschlußstelle wird das Kommunikationssystem nicht benötigt. Beim Auftreten mehrerer Fehler im Stromversorgungssystem erfolgt das Abtrennen der defekten Netzanschlußstellen bzw. Verbindungsleitungen wie beschrieben, und die mit dem Einspeisepunkt noch in Verbindung stehenden Informationsverarbeitungseinheiten werden weiter mit Energie versorgt. Die Erfindung ist auch anwendbar in linienförmigen Stromversorgungssystemen, wobei durch das Abschalten eines kurzschlußbehafteten Teils des Systems die Energieversorgung nur bis zum ausgelösten Schalter erhalten bleibt.

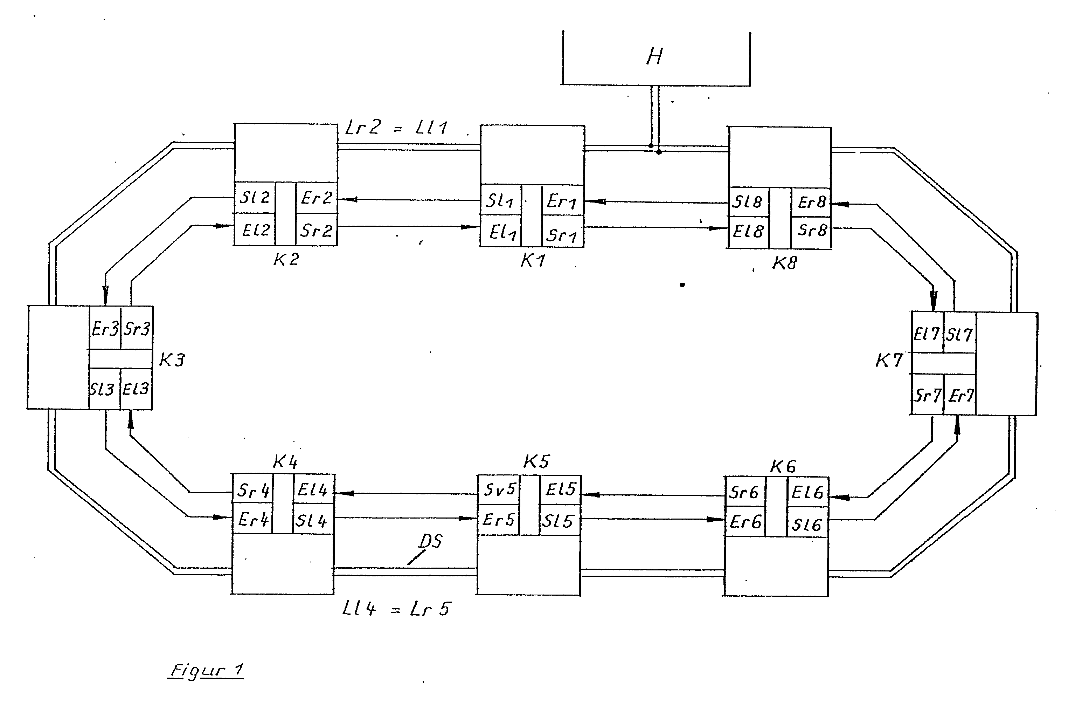

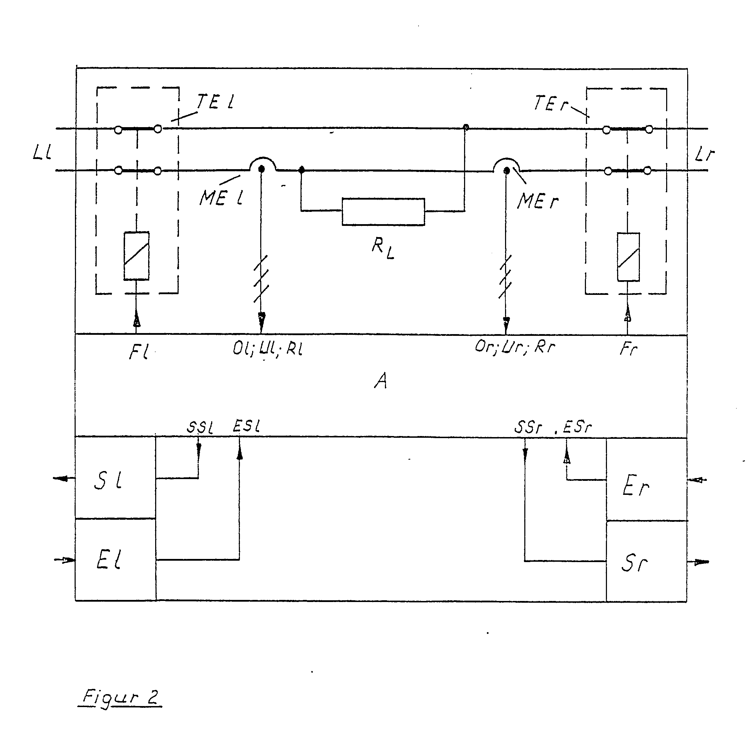

Die Erfindung wird an einen Ausführungsbeispiel erläutert, wobei Figur 1 den Aufbau eines fehlertoleranten Stromversorgungssystems für acht kommunikationsfähige Informationsverarbeitungseinheiten und Figur 2 den Aufbau einer Netzanschlußstelle zeigen.

Wie aus Fig. 1 hervorgeht, erfolgt die Verteilung der Energie über ein Ringsystem. das aus Punkt-zu-Punkt-Verbindungsleitungen zwischen Netzanschlußstellen K1 ... K8 besteht, wobei die Energieeinspeisung über einen Einspeisepunkt H zwischen den Netzanschlußstellen K1 und K8 erfolgt. Die Kommunikationsbeziehungen zwischen den Netzanschlußstellen K, die über Informationsverarbeitungseinheiten RL realisiert werden, sind durch Pfeile symbolisiert, wobei die physische Struktur des Informationsübertragungssystems nicht dargestellt ist, da sie von untergeordneter Bedeutung ist (z. B. Linienbussystem, sternförmiges Informationsübertragungssystem, Ringsystem mit Punkt-zu-Punkt-Übertragung der Information). Es muß lediglich ein solches System gewählt werden, das einen schnellen. quasi gleichzeitigen Informationsaustausch zwischen zwei an benachbarten Netzanschlußstellen angeschlossenen Informationsverarbeitungseinheiten ermöglicht. Jede fehlertolerante Netzanschlußstelle K1 ...K8 besteht entsprechend Figur 2 aus je einer Strommeßeinrichtung MEl, MEr pro angeschlossener Verbindungsleitung Ll, Lr, wobei jede Strommeßeinrichtung MEl, MEr die Binärausgänge für die binären Signale Ol bzw. Or für das Überschreiten des festgelegten oberen, Ul bzw. Ur für das Unterschreiten des festgelegten unteren Stromgrenzwertes und für das Stromrichtungssignal Rl bzw. Rr aufweist. Die Binärausgänge sind mit den entsprechenden Eingängen einer Auswertelogik A verbunden.

Weiterhin sind in jeder fehlertoleranten Netzanschlußstelle in den beiden Verbindungsleitungen Ll, Lr steuerbare Schalter TEl, TEr angeordnet, die von der Auswertelogik A durch die statischen Signale Fl, Fr angesteuert werden. Als Lastwiderstand RL symbolisiert ist an jeder Netzanschlußstelle K eine kommunikationsfähige Informationsverarbeitungseinheit oder ein beliebiger Verbraucher, der aber über eine kommunikationsfähige Informationsverarbeitungseinheit verfügt, angeschlossen.

Die der Kommunikation mit den benachbarten Netzanschlußstellen dienenden Sendeeinrichtungen Sl, Sr und Empfangseinrichtungen El, Er sind Bestandteil der Informationsverarbeitungseinheit und in der speziellen Anordnung und Wirkungsweise jeweils deren Regime unterworfen. Die Sendeeinrichtungen Sl, Sr werden durch die von der Auswertelogik A erzeugten binären Signale SSl. SSr aktiviert, und die Empfangseinrichtungen El. Er zeigen den Empfang von Informationen der Sendeeinrichtungen der an den benachbarten Netzanschlußstellen angeschlossenen Informationsverarbeitungseinheiten der Auswertelogik A mittels der binären Signale ESl, ESr an.

Die Auswertelogik A enthält eine logische Schaltung, welche die Verknüpfung der einzelnen Signale entsprechend den nachstehend angegebenen Booleschen Gleichungen realisiert,

Fl = (ESl = Rl) $\vee$ INTK
Fr = (ESr = Rr) $\vee$ INTK
SSl = (Ol $\vee$ ESl) $\wedge$ RL
SSr = (Or $\vee$ Esr) $\wedge$ Rr
mit INTK = [(Ol $\vee$ Or) $\wedge$ (Rl = Rr)] $\vee$ [Ol $\wedge$ (Fr $\vee$ Ur)] $\vee$ [Or $\wedge$ (Fl $\vee$ Ul)] ,
wobei F binäre, statische Ansteuersignale für die zugeordneten Schalter (TEl, TEr), SS binäre Sendesignale für die Sendeeinrichtungen (Sl, Sr), ES binäre Empfangssignale von den Enpfangseinrichtungen (El, Er), l und r Indi es zur Unterscheidung der Bezugsrichtungen zu den jeweils beiden benachbarten Netzanschlußstellen und INTK ein internes Signal bedeuten. Zur Erläuterung der Wirkungsweise der Anordnung im Fehlerfall sei angenommen, daß der Fehler an einer Defektstelle DS in der Verbindungsleitung Ll4 = Lr5 zwischen den Netzanschlußstellen K4 und K5 auftritt.

Fehlerfall Leitungsunterbrechung:

Eine Leitungsunterbrechung kann von jeder angrenzenden Netzanschlußstelle K4, K5 autonom festgestellt werden. Es wird dann von den Meßeinrichtungen MEl4 und MEr5 kein Strom registriert und infolge Unterschreitung des entsprechend eingestellten unteren Stromgrenzwertes das Signal Ul an die Auswertelogik A der Netzanschlußstelle K4 und Ur and die Auswertelogik A der Netzanschlußstelle K5 abgegeben. Eine Leitungsunterbrechung liegt dann vor, wenn über eine bestimmte Mindestzeit das Signal U erhalten bleibt. Es erfolgt keine Abschaltung der betreffenden Verbindungsleitung.

Fehlerfall Leitungskurzschluß:

Tritt an der angenommenen Defektstelle DS ein Kurz-oder Erdschluß auf, fließt systemweit ein den oberen Stromgrenzwert überschreitender Strom. Bei der weiteren Erläuterung wird angenommen, daß das Stromrichtungssignal R bei aus der Netzanschlußstelle K herausfließendem Strom gesetzt ist. Folglich werden über die Auswerteeinheiten der Netzanschlußstellen K1 bis K4 mittels der Sendesignale SSl die Sendeeinrichtungen Sl1 bis Sl4 und der Netzanschlußstellen K5 bis K8 mittels der Sendesignale SSr die Sendeeinrichtungen S5 bis S8 aktiviert. Die entsprechenden Empfangseinrichtungen Er2 bis Er5 und El4 bis El7 der Netzanschlußstellen K2 bis K8 erhalten Empfangssignale ES. Der Vergleich der Empfangssignale mit den jeweiligen Stromrichtungssignalen in den Auswertelogiken A ergibt, daß ausschließlich in den Netzanschlußstellen K4 und K5 mit ESl4 = Rl4 und ESr5 = Rr5 die Bedingung zur Ausgabe von Ansteuersignalen für die Schalter erfüllt ist, so daß die defekte Verbindungsleitung Ll4 = Lr5 durch die Schalter TEl4 und TEr5 aufgrund der Ansteuerung durch die statischen Signale Fl4 und Fr5 zur Abschaltung kommt.

Fehlerfall interner Kurzschluß:

Bei Auftreten eines internen Kurz-oder Erdschlusses, beispielsweise innerhalb der Netzanschlußstelle K5, fließt der den oberen Grenzwert übersteigende Strom vom Einspeisepunkt H über beide Ringteile in Richtung der kurzschlußbehafteten Netzanschlußstelle K5. Da nur in der Netzanschlußstelle K5 die Bedingung Rl = Rr erfüllt ist, wird in der Auswertelogik A das interne Signal INTK erzeugt, welches zur Ansteuerung der Schalter TEl5 und TEr5 und damit zum Abtrennen der gesamten Netzanschlußstelle K5 vom Stromversorgungssystem führt.

Liegt im Stromversorgungssystem bereits ein Defekt vor, beispielsweise in der Verbindungsleitung zwischen den Netzanschlußstellen K2 und K3, fließt im Falle eines internen Kurz-oder Erdschlusses in der Netzanschlußstelle K5 ein den oberen Grenzwert überschreitender Strom vom Einspeisepunkt H über die Netzanschlußstellen K8, K7, K6 nach K5, während über K1 nach K2 ein im Normalbereich liegender Strom fließt. Die Verbindungsleitung Lr5 führt also gar keinen Strom, so daß in der Netzanschlußstelle K5 das Signal Ur5 gesetzt ist, wodurch ebenfalls das interne Signal INTK in der Auswertelogik entsteht.

Natürlich besteht auch die Möglichkeit, mittels des Ringsystems Verbraucher zu versorgen, ohne ein fehlertolerantes Verhalten zu gewährleisten. Dafür kommen nicht nur solche Verbraucher in Betracht, die nicht über Informationseinheiten miteinander in Kommunikationsbeziehungen stehen, sondern auch solche mit Kommunikationsbeziehungen zu anderen Systemkomponenten, die aber besonderer Schalter oder der Auswertelogik entbehren.

**Ansprüche**

1. Fehlertolerantes ringförmiges Stromversorgungssystem für miteinander kommunikationsfähige Informationsverarbeitungsheiten(RL) mit einem einzigen Einspeisepunkt (H) in den Ring, der aus Punkt-zu-Punkt-Verbindungsleitungen (L) besteht, deren Verbindungspunkte fehlertolerante Netzanschlußstellen (K) bilden, dadurch gekennzeichnet, daß in den Verbindungsleitungen (L) nahe den Netzanschlußstellen (K) Strommeßeinrichtungen (ME) für die Messung des Betrages und die Bestimmung der Richtung des Stroms und steuerbare Schalter (TE) vorgesehen sind, wobei jede Netzanschlußstelle (K) der Kommunikation mit den benachbarten Netzanschlußstellen (K) dienende Sendeeinrichtungen (S) und Empfangseinrichtungen (E) aufweist, und die Netzanschlußstellen (K) eine Auswertelogik (A) enthalten, die mit den Sende-und Empfangseinrichtungen (S; E) verbunden ist und die jeweils betroffenen Schalter zur Kurzschlußfortschaltung ansteuert.

2. Stromversorgungssystem nach Anspruch 1, dadurch gekennzeichnet, daß die Strommeßeinrichtungen (ME; MEr) jeweils drei Binärausgänge für die binären Signale für das Überschreiten eines festgelegten oberen Stromgrenzwertes (O), für das Unterschreiten eines festgelegten unteren Stromgrenzwertes (U) und für ein Stromrichtungssignal (R) aufweisen.

3. Stromversorgungssystem nach Anspruch 1 oder 2, dadurch gekennzeichnet, daß die Auswertelogik (A) eine Schaltungsanordnung enthält, welche die Booleschen Gleichungen

$$Fl = (ESl = Rl) \vee INTK$$
$$Fr = (ESr = Rr) \vee INTK$$
$$SSl = (Ol \vee ESl) \wedge Rl$$
$$SSr = (Or \vee Esr) \wedge Rr$$

mit $INTK = [(Ol \vee Or) \wedge (Rl = Rr)] \vee [Ol \wedge (Fr \vee Ur)] \vee [Or \wedge (Fl \vee Ul)]$

realisiert, wobei F binäre, statische Ansteuersignale für die zugeordneten Schalter (TEl, TEr), SS binäre Sendesignale für die Sendeeinrichtungen (Sl, Sr), ES binäre Empfangssignale von den Empfangseinrichtungen (El, Er), l und r Indices zur Unterscheidung der Bezugsrichtungen zu den jeweils beiden benachbarten Netzanschlußstellen und INTK ein internes Signal bedeuten.

Figur 1

Figur 2